# EUROPEAN PATENT APPLICATION

(11) **EP 4 686 054 A1**
(43) Date of publication of application: **28.01.2026**
(21) Application number: 24774466.7
(22) Date of filing: 02.02.2024
(51) Int. Cl.: H02K 24/00, G01D 5/20, H02K 1/14, H02K 5/22

(54) **STATOR ASSEMBLY**

(30) Priority: 22.03.2023 JP 2023045525
(71) Applicant: MINEBEA MITSUMI Inc., Miyota-machi, Kitasaku-gun Aichi 389-0293 (JP)
(72) Inventor: MIYAO, Kazuki, Kitasaku-gun, Nagano 389-0293 (JP)
(74) Representative: Winter, Brandl - Partnerschaft mbB
(86) International application number: PCT/JP2024/003573
(87) International publication number: WO 2024/195320

(57) **Abstract**

A stator assembly 1 includes a stator core 22, a plurality of coils 23 including a winding 25 wound around the stator core 22, a terminal 35 electrically connected to the winding 25, and a terminal block 33 provided on the stator core 22 and supporting the terminal 35. The terminal block 33 includes a recessed part 39 and a plurality of through-holes 40 formed in the recessed part 39. The terminal 35 electrically connected to the lead 36 in the through-hole 40 is covered with a filler 43.

## Description

### Technical Field

The present invention relates to a stator assembly.

### Background Art

For example, a resolver as disclosed in Patent Document 1 is incorporated in a traveling motor being a drive source of an electric vehicle (EV). The resolver is attached to a rotation shaft of the traveling motor and detects a rotation angle of the rotation shaft. A rotational speed of the rotation shaft can be specified by detecting the rotational angle.

### Citation List

### Patent Literature

PTL 1: JP 2022-11562 A

### Summary of Invention

### Technical Problem

In the resolver of Patent Document 1, a terminal and a lead are electrically connected in an accommodation unit formed in a terminal pin base unit. A filler is applied to an electrically connected part. In the application, the potting is performed while a stator assembly including the terminal pin base unit is moved up and down. It is required to improve an efficiency of an assembly work.

Thus, an object of the present invention is to provide a stator assembly capable of improving the efficiency of the assembly work.

### Solution to Problem

A stator assembly according to one aspect of the present invention includes a stator core, a plurality of coils including a winding wound around the stator core, a terminal electrically connected to the winding, and a terminal block provided on the stator core and supporting the terminal. The terminal block includes a recessed part and a plurality of through-holes formed in the recessed part. The terminal electrically connected to a lead in the through-hole is covered with a filler.

### Brief Description of Drawings

FIG. 1 is a top perspective view schematically illustrating a structure of a resolver 1 according to one specific example.
FIG. 2 is a plan view schematically illustrating the structure of the resolver 1 according to one specific example.
FIG. 3 is a bottom perspective view schematically illustrating the structure of the resolver 1 according to one specific example.
FIG. 4 is a cross-sectional view taken along a line 4-4 in FIG. 1.
FIG. 5 is a partially enlarged perspective view schematically illustrating the structure of the resolver 1 according to one specific example.
FIG. 6 is a partially enlarged plan view schematically illustrating the structure of the resolver 1 according to one specific example.
FIG. 7 is a partially enlarged cross-sectional view taken along a line 7-7 in FIG. 6.
FIG. 8 is a partially enlarged transparent plan view schematically illustrating the structure of the resolver 1 according to one specific example.
FIG. 9 is a partially enlarged bottom view schematically illustrating the structure of the resolver 1 according to one specific example.
FIG. 10 is a partially enlarged perspective view schematically illustrating a state of filling the recessed part 39 with a filler 43 by a filler application device 44.

### Description of Embodiments

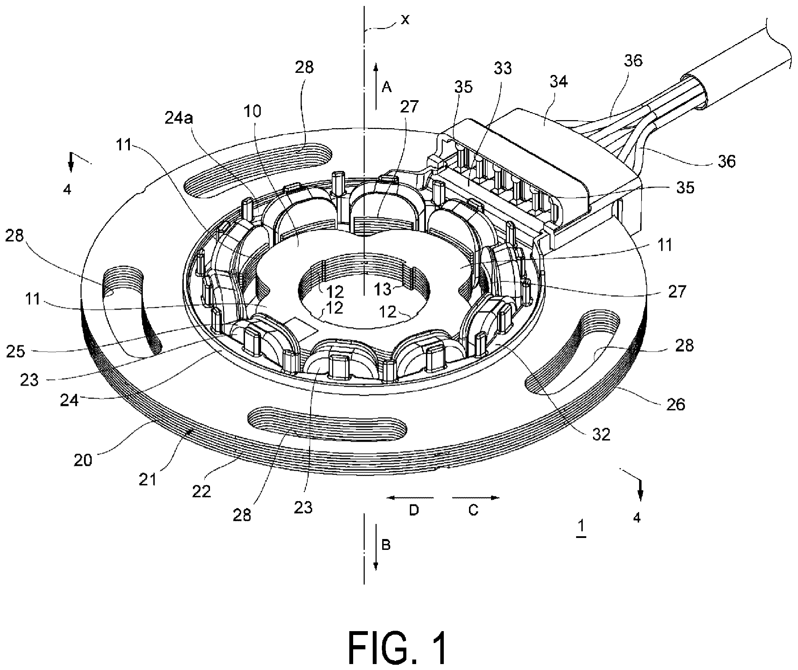

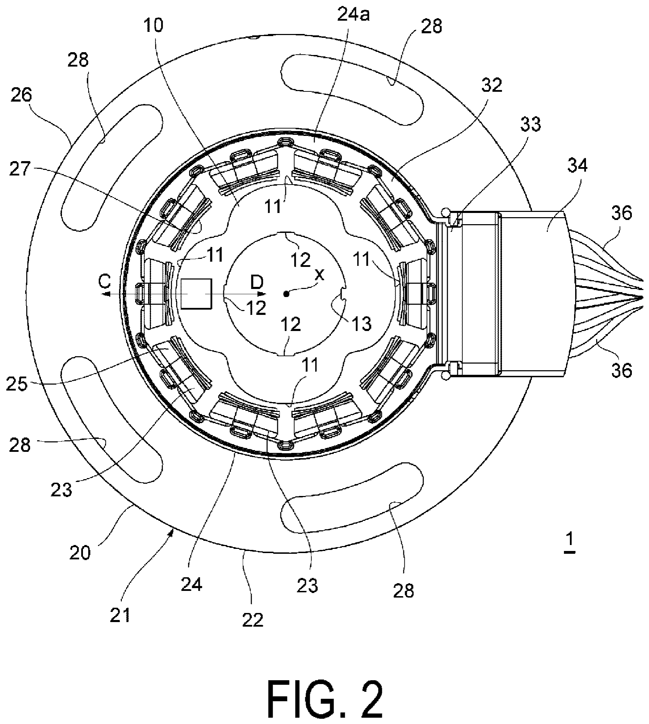

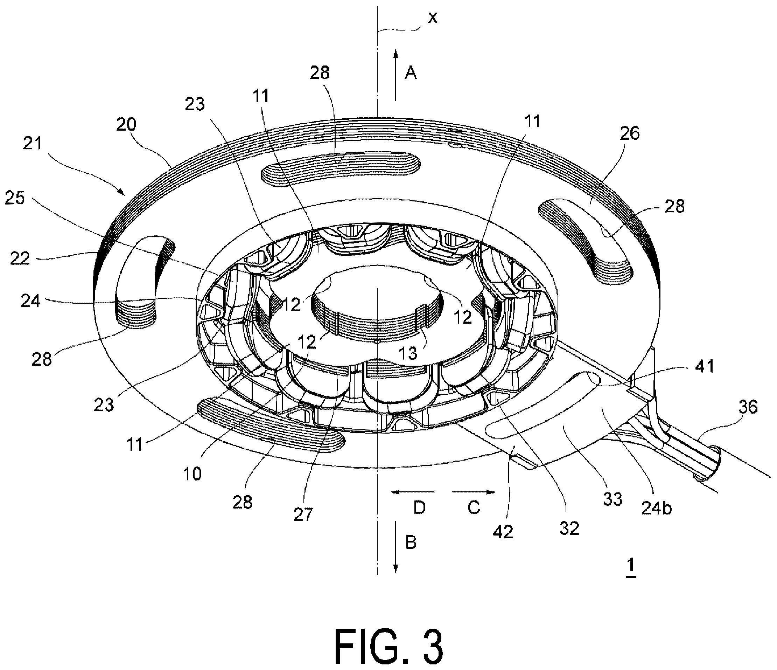

An embodiment of the present invention will be described below with reference to the accompanying drawings. FIG. 1 is a top perspective view schematically illustrating a structure of a resolver 1 according to one specific example. FIG. 2 is a plan view schematically illustrating the structure of the resolver 1 according to one specific example. FIG. 3 is a bottom perspective view schematically illustrating the structure of the resolver 1 according to one specific example. The resolver 1 is, for example, an inner rotor type resolver and a variable reluctance (VR) type resolver. The resolver 1 determines a rotation speed of an electric motor (not illustrated) by detecting a rotation angle of a rotation shaft of the electric motor being a drive source of an electric vehicle (EV) or the like, for example.

Referring to FIGS. 1 to 3 together, the resolver 1 defines a rotation axial line x coinciding with a rotation shaft center of the electric motor. Note that in FIGS. 1 to 3, illustration of the rotation shaft of the electric motor is omitted. In the description of the present embodiment, one side in the rotation axial line x direction is defined as an upper side A, and the other side at the opposite side of the upper side A is defined as a lower side B. However, the upper side A and the lower side B do not necessarily match an upper side and a lower side in the direction of gravity. Additionally, in a radial direction defined perpendicular to the rotation axial line x, a side away from the rotation axial line x is defined as a radially outer side C and a side toward the rotation axial line x is defined as a radially inner side D. Further, a peripheral direction is defined to be around the rotation axial line x.

The resolver 1 includes a rotor 10 formed in an annular shape around the rotation axial line x of the resolver 1. The rotor 10 is formed of a stacked body of a plurality of thin plates stacked in the rotation axial line x direction. The stacked body is formed from a magnetic material. At an outer peripheral surface defined at the radially outer side C of the rotor 10, for example, a plurality of (four in the present embodiment) protruding parts 11 projecting toward the radially outer side C are defined at angular intervals of 90 degrees in the peripheral direction. That is, the rotor 10 has a structure of an axial double angle 4X. A contour of each protruding part 11 in a plan view of the rotor 10 is defined by a curve protruding toward the radially outer side C. The structure of the rotor 10 is not limited to the axial double angle 4X.

An inner peripheral surface defined at the radially inner side D of the rotor 10 is defined in, for example, a cylindrical shape. At the inner peripheral surface, one or more recessed parts 12 recessed toward the radially outer side C and one protruding part 13 projecting toward the radially inner side D are formed. In this example, three recessed parts 12 and one protruding part 13 are arrayed at an angular gap of 90 degrees around the rotation axial line x. The recessed part 12 and the protruding part 13 are disposed at angular positions corresponding to the protruding parts 11 at the outer peripheral surface in the peripheral direction. The recessed part 12 and the protruding part 13 extend from an upper surface to a lower surface of the rotor 10 in parallel to the rotation axial line x. The rotation shaft (not illustrated) of the electric motor is attached at the inner peripheral surface of the rotor 10 by, for example, press fitting.

The resolver 1 includes a stator 20 disposed at the radially outer side D of the rotor 10. The stator 20 includes a stator assembly 21 according to the present invention. The stator assembly 21 includes a stator core 22 having an annular shape, a plurality of coils 23, and an insulator 24. The stator core 22 is formed of a stacked body of a plurality of thin plates stacked in the rotation axial line x direction. The stacked body is formed from a magnetic material. The coil 23 includes a winding 25 wound around the stator core 22. The winding 25 is, for example, a copper wire. The insulator 24 is an insulating member disposed between the stator core 22 and the plurality of coils 23. The insulator 24 is formed of, for example, a resin material.

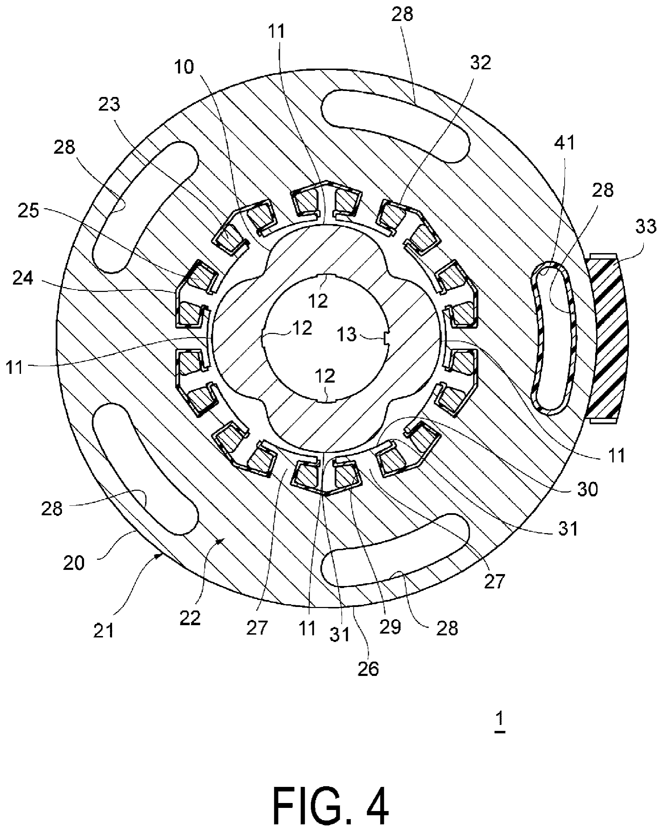

FIG. 4 is a cross-sectional view taken along a line 4-4 in FIG. 1. Referring to FIGS. 1 to 4 together, the stator core 22 includes an annular part 26 and a plurality of, ten in this example, teeth 27. The annular part 26 is defined annularly around the rotation axial line x. One or more long holes 28 formed in an arc shape in the peripheral direction are formed at the annular part 26. In this example, five long holes 28 are arrayed at equal intervals in the peripheral direction (see FIG. 4). In FIGS. 1 to 3, one long hole 28 of the five long holes 28 is covered with a part of the insulator 24. A screw member (not illustrated) for attaching the stator assembly 21 to, for example, a casing of the electric motor is inserted into one or more of the five long holes 28.

As is clear from FIG. 4, each tooth 27 projects from the inner peripheral surface of the annular part 26 toward the radially inner side D. A plurality of the teeth 27 are arrayed at equal intervals in the peripheral direction. Each tooth 27 includes a spoke 29 and a magnetic pole part 30. The magnetic pole part 30 continues to an inner peripheral end of the spoke 29. The magnetic pole part 30 includes two projecting part 31 extending in opposite directions in the peripheral direction. The teeth 27 face the outer peripheral surface of the rotor 10 at a predetermined magnetic gap at the inner peripheral surface of the magnetic pole part 30. The magnetic gap varies depending on the protruding part 11 at the outer peripheral surface of the rotor 10. The winding 25 of the coil 23 is wound around each spoke 29. The insulator 24 is disposed between the spoke 29 and the coil 23.

Returning to FIGS. 1 to 3, the insulator 24 includes a main body part 32 and a terminal block 33 continuous with the main body part 32. The main body part 32 is formed in an annular shape as a whole, and includes a plurality of parts insulating the stator core 22 from the coil 23. The main body part 32 is disposed between the coil 23 and the stator core 22 in the radial direction. That is, the annular part 26 of the stator core 22 extends from the main body part 32 toward the radially outer side C. The terminal block 33 extends from the main body part 32 toward the radially outer side C and is provided on the stator core 22. A part of the annular part 26 of the stator core 22 is disposed in the terminal block 33. The main body part 32 and the terminal block 33 are integrally formed of, for example, a resin material by integral molding.

The insulator 24 is divided into an upper half part (first member) 24a (see FIGS. 1 and 2) disposed at the upper side A in the rotation axial line x direction and a lower half part (second member) 24b (see FIG. 3) disposed at the lower side B of the upper half part 24a. The stator core 22 is sandwiched between the upper half part 24a and the lower half part 24b. That is, the main body part 32 and the terminal block 33 of the insulator 24 are formed by the upper half part 24a constituting an upper part and the lower half part 24b constituting a lower part.

The stator assembly 21 includes a terminal cover 34 attached to the terminal block 33 at the upper side A. The terminal cover 34 covers an upper surface of the terminal block 33. As illustrated in FIG. 1, the terminal block 33 supports one or more terminal pins (terminals) 35 in the terminal cover 34. In this example, six terminal pins 35 are raised from the upper surface of the terminal block 33. Although not illustrated, the winding 25 of the coil 23 is electrically connected to one ends of the terminal pins 35. As described below, one ends of leads 36 being external wirings is electrically connected to the other ends of the terminal pins 35. The leads 36 are bundled together. The other end of the lead 36 is connected to, for example, a connector (not illustrated). The connector is connected to, for example, a control unit (not illustrated) of the electric vehicle.

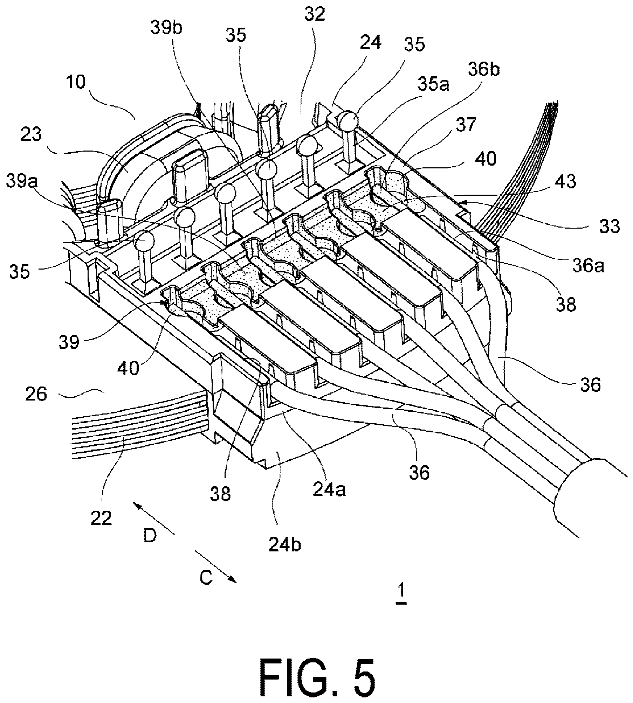

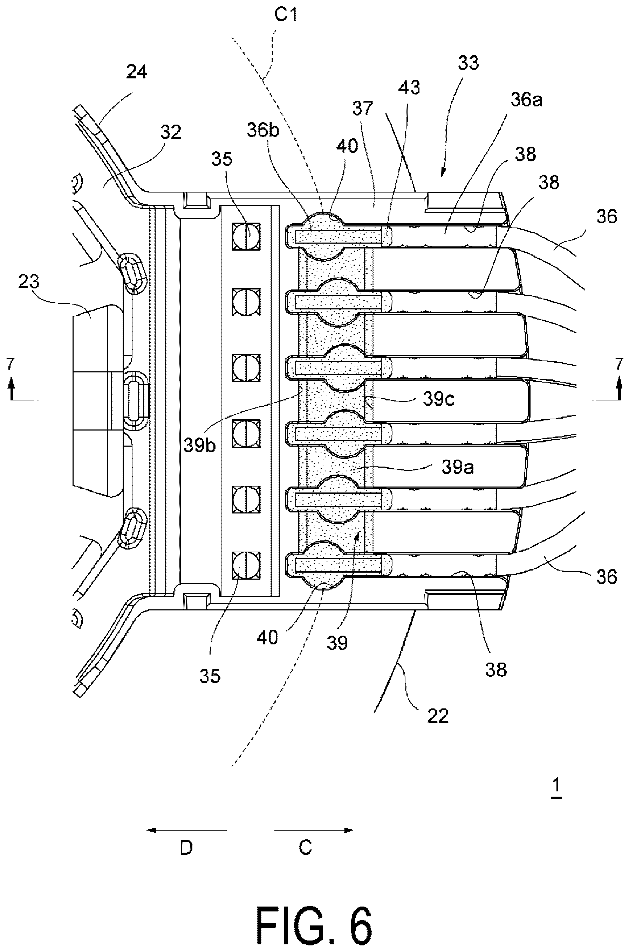

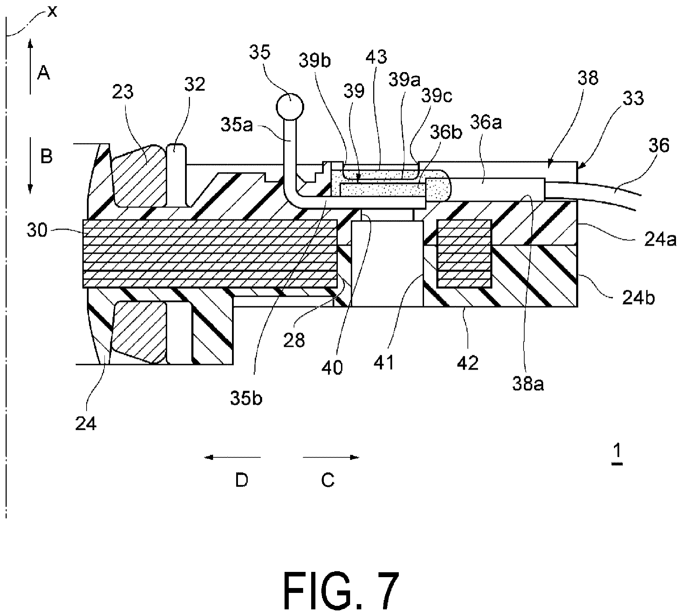

FIG. 5 is a partially enlarged perspective view schematically illustrating the structure of the resolver 1 according to one specific example. FIG. 6 is a partially enlarged plan view schematically illustrating the structure of the resolver 1 according to one specific example. FIG. 7 is a partially enlarged cross-sectional view taken along a line 7-7 in FIG. 6. In FIGS. 5 to 7, the terminal cover 34 is not illustrated. Referring to FIGS. 5 to 7 together, the terminal block 33 extends from the main body part 32 of the insulator 24 toward the radially outer side C beyond the outer peripheral surface of the annular part 26 of the stator core 22. As is clear from FIG. 7, a boundary between the upper half part 24a and the lower half part 24b of the insulator 24 including the terminal block 33 is defined at a position corresponding to about a half of the thickness of the insulator 24 defined along the rotation axial line x, for example.

The six terminal pins 35 are arrayed at the radially inner side D of the terminal block 33. The terminal pins 35 are arrayed, for example, at equal intervals on a straight line in a tangential direction of a virtual circle centered on the rotation axial line x. As illustrated in FIG. 7, the terminal pin 35 is formed integrally with the terminal block 33 by, for example, insert molding. Each of the terminal pins 35 includes a first connecting part 35a electrically connected with the winding 25 and a second connecting part 35b electrically connected with the lead 36. The first connecting part 35a rises upward from the terminal block 33 along the rotation axial line x. The second connecting part 35b is bent from a lower end of the first connecting part 35a and extends toward the radially outer side C.

Returning to FIGS. 5 to 7, the terminal block 33 defines, for example, an upper surface 37 extending along a virtual plane orthogonal to the rotation axial line x. The virtual plane defined along the upper surface 37 does not necessarily have to be orthogonal to the rotation axial line x. The terminal block 33 includes a plurality of long grooves 38 extending in a direction orthogonal to a virtual tangent line with the terminal pins 35 being arrayed. The long groove 38 extends from an outer peripheral edge of the terminal block 33 toward the radially inner side D. In this example, the outer peripheral edge of the terminal block 33 is defined in an arc shape along a virtual circle defined around the rotation axial line x (see FIG. 6). Each long groove 38 is recessed from the upper surface 37 toward the lower side B. The plurality of long grooves 38 are arrayed at equal intervals, for example, in the tangential direction corresponding to the positions of the terminal pins 35.

Each lead 36 is accommodated in each long groove 38 from the radially outer side C toward the radially inner side D of the terminal block 33. Each lead 36 includes a cover 36a and a core wire 36b projecting from a distal end of the cover 36a. The core wire 36b of the lead 36 is disposed at the radially inner side D in the long groove 38. The terminal block 33 includes a recessed part 39 formed to be recessed from the upper surface 37 of the terminal block 33. In this example, the recessed part 39 is adjacent to an inner peripheral end of the long groove 38, and longitudinally extends across all the long grooves 38 while intersecting the long grooves 38 along the tangential direction with the terminal pins 35 being arrayed. That is, the upper surface 37 extends to the radially outer side C beyond the recessed part 39. In this example, as illustrated in FIG. 7, a depth from the upper surface 37 to a bottom surface 39a of the recessed part 39 is smaller than a depth from the upper surface 37 to a bottom surface 38a of the long groove 38.

The recessed part 39 includes the bottom surface 39a, an inner peripheral standing wall 39b disposed at the radially inner side D of the bottom surface 39a, and an outer peripheral standing wall 39c disposed at the radially outer side C of the bottom surface 39a. In this example, the bottom surface 39a extends along, for example, the virtual plane orthogonal to the rotation axial line x. The inner peripheral standing wall 39b and the outer peripheral standing wall 39c extend along the rotation axial line x from the bottom surface 39a along a virtual plane parallel to the rotation axial line x. In this example, the inner peripheral standing wall 39b and the outer peripheral standing wall 39c are defined to be parallel to each other.

The terminal block 33 includes one or more through-holes 40 formed at a position corresponding to the long groove 38 in the recessed part 39. That is, the through-hole 40 is formed at the bottom surface 39a of the recessed part 39. Each through-hole 40 penetrates the terminal block 33 along the rotation axial line x. In this example, as illustrated in FIG. 6 in particular, a plurality of the through-holes 40 are arrayed in an arc shape along a virtual circle C1 centered on the rotation axial line x. The second connecting part 35b of the terminal pin 35 and the core wire 36b of the lead 36 are electrically connected in each through-hole 40. Specifically, the second connecting part 35b of the terminal pin 35 extends into the through-hole 40, and the core wire 36b of the lead 36 is disposed on the second connecting part 35b. The electrical connection is achieved by, for example, resistance welding. However, the electrical connection may include other connections such as soldering.

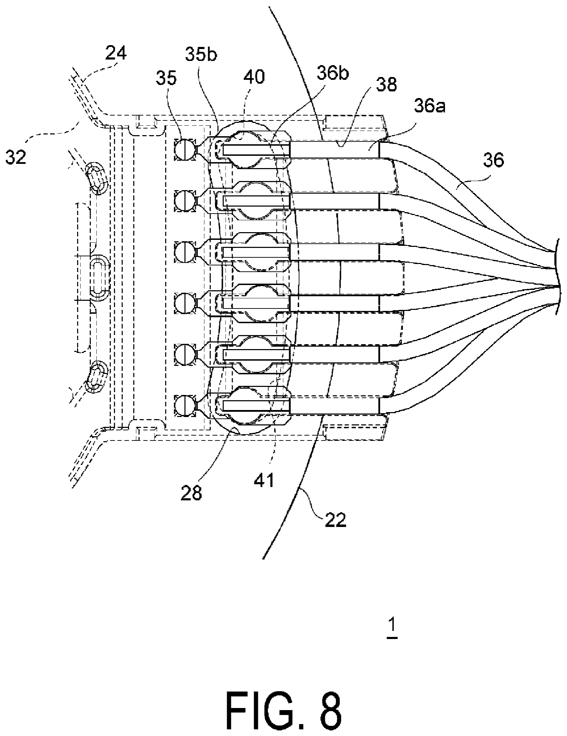

FIG. 8 is a partially enlarged transparent plan view schematically illustrating the structure of the resolver 1 according to one specific example. In FIG. 8, the insulator 24 is indicated by a dotted line. As is clear from FIG. 8, the second connecting part 35b of the terminal pin 35 is formed in a flat plate shape. The second connecting part 35b having the flat plate shape has a size sufficient to close the through-hole 40. That is, the size of a flat plate of the second connecting part 35b is set to be, for example, larger than a diameter of the cylindrical through-hole 40 in the tangential direction with the terminal pins 35 being arrayed and in the direction perpendicular to the tangential direction.

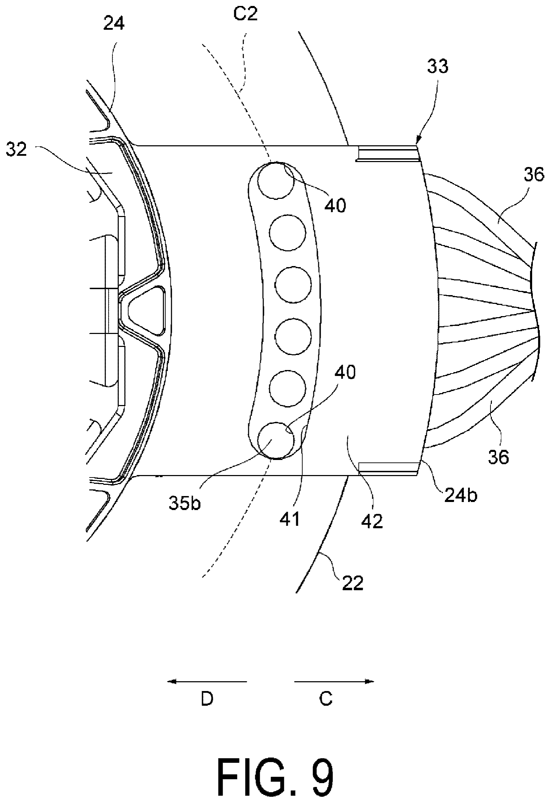

FIG. 9 is a partially enlarged bottom view schematically illustrating the structure of the resolver 1 according to one specific example. Referring to FIGS. 7 to 9 together, a recessed part 41 formed at a position corresponding to the long hole 28 is formed at the terminal block 33 disposed at the lower side B beyond the stator core 22. The recessed part 41 is formed in an arc shape along a virtual circle C2 centered on the rotation axial line x. The recessed part 41 is recessed from a lower surface 42 of the terminal block 33 toward the upper side A along the rotation axial line x. The through-hole 40 is formed at a bottom surface of the recessed part 41. That is, the through-hole 40 communicates with the recessed part 41 of the terminal block 33. The through-hole 40 opens at both side of the upper side A and the lower side B of the terminal block 33. The second connecting part 35b of the terminal pin 35 is exposed in the through-hole 40. As is clear from FIG. 8, the recessed part 41 of the terminal block 33 is formed inside a contour of the long hole 28 of the stator core 22.

Returning to FIGS. 5 to 7, the cured filler 43 is disposed in the recessed part 39 of the terminal block 33. In this example, the filler 43 fills the recessed part 39 from one end to the other end of the recessed part 39 defined in the peripheral direction. That is, across all the through-holes 40 formed in the recessed part 39, the through-holes 40 are filled with the filler 43. An electrically connected part between the second connecting part 35b of the terminal pin 35 and the core wire 36b of the lead 36 electrically connected in the through-hole 40 is covered with the filler 43. The filler 43 fills the recessed part 39 by, for example, a potting process described later. For the filler 43, a resin material such as an epoxy resin or a silicone resin is preferably used.

Next, a manufacturing method for the resolver 1 will be described. First, the rotor 10 and the stator assembly 21 are assembled. In assembling the stator assembly 21, the upper half part 24a and the lower half part 24b of the insulator 24 are attached from the upper side A and the lower side B of the stator core 22, respectively. the terminal pin 35 is formed integrally with the terminal block 33 of the upper half part 24a by insert molding. Thereafter, the winding 25 of the coil 23 is wound around each spoke 29 of the stator core 22. The winding 25 is electrically connected to the first connecting part 35a of the terminal pin 35.

The lead 36 is disposed in each long groove 38 of the terminal block 33. The core wire 36b of the lead 36 is disposed on the second connecting part 35b of the terminal pin 35 in the through-hole 40. The core wire 36b and the second connecting part 35b are electrically connected by, for example, resistance welding. Specifically, one electrode for the resistance welding is pressed against the core wire 36b in the through-hole 40 from the upper side A of the terminal block 33. On the other hand, the other electrode for the resistance welding is pressed against the second connecting part 35b in the through-hole 40 via the recessed part 41 from the lower side B of the terminal block 33. By passing a current through the two electrodes in this manner, the core wire 36b and the second connecting part 35b are electrically connected to each other by welding.

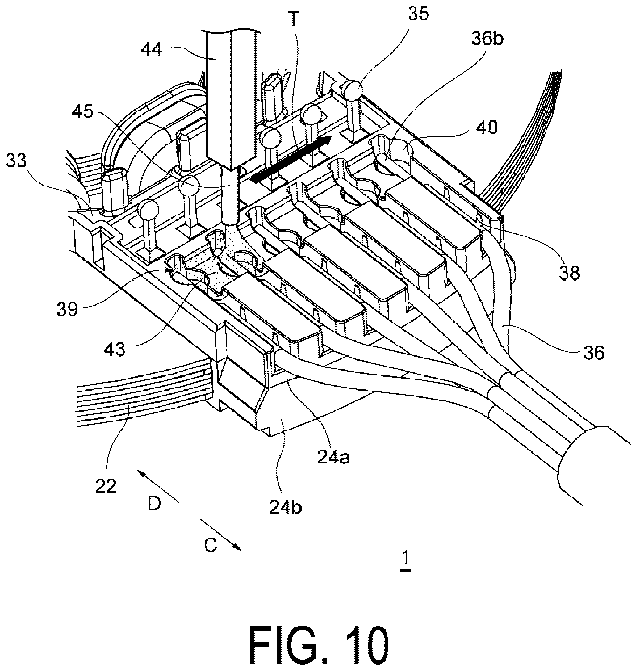

FIG. 10 is a partially enlarged perspective view schematically illustrating a state of filling the recessed part 39 with a filler 43 by a filler application device 44. As illustrated in FIG. 10, for example, a nozzle 45 of the filler application device 44 relatively moves horizontally along a tangential direction (arrow T) of a virtual circle centered on the rotation axial line x to fill the recessed part 39 with the filler 43. At this time, a relative movement between the nozzle 45 and the stator assembly 21 may be achieved by moving either one of the nozzle 45 and the stator assembly 21. In this way, the filler 43 also fills the through-holes 40 formed in the recessed part 39. Thereafter, the filler 43 is cured, and the terminal cover 34 is attached to the terminal block 33. In this way, the stator assembly 21 is manufactured.

In the resolver 1 as described above, the terminal block 33 of the stator assembly 21 includes the recessed part 39 and the plurality of through-holes 40 formed in the recessed part 39. The second connecting part 35b of the terminal pin 35 and the core wire 36b of the lead 36 are electrically connected in the through-hole 40. The electrical connection is covered with the filler 43 in the through-hole 40. For example, the nozzle 45 is horizontally moved in the recessed part 39 relative to the stator assembly 21, and thus the filler 43 also fills the plurality of through-holes 40. The stator assembly 21 does not need to be moved up and down during assembly of the stator assembly 21. Thus, the efficiency of the assembly work of the stator assembly 21 can be improved.

Moreover, the filler 43 fills the recessed part 39 with the plurality of through-holes 40 being formed, and thus the plurality of through-holes 40 are easily filled with the filler 43. Thus, for example, when the nozzle 45 has a width equivalent to the length of the recessed part 39 defined in the peripheral direction, the relative movement itself between the nozzle 45 and the stator assembly 21 can be omitted. The efficiency of the assembly work can be further improved.

The terminal block 33 is disposed on the long hole 28 formed at the stator core 22 in the arc shape in the peripheral direction. The plurality of through-holes 40 formed in the recessed part 39 of the terminal block 33 are disposed in an arc shape along the long hole 28 of the stator core 22. In this way, the pair of electrodes of the resistance welding can access the terminal pin 35 and the lead 36 electrically connected in the through-hole 40 from above and below. Since the long hole 28 is a hole for an attaching a screw for attaching the resolver 1, it is not necessary to newly provide a hole for welding at the stator core 22. For example, the stator assembly 21 being the resolver 1 can be downsized in outer shape as compared with a conventional example performing an electrical connection at the terminal block radially outer side beyond the outer peripheral edge of the stator core.

Although the present invention has been described through the above embodiments, the technical scope of the present invention is not limited to the scope described in the above embodiments. Various modifications or improvements can be made to the above embodiments, and this is obvious to a person having skill in the art. Such modified or improved form is also included in the technical scope of the present invention, and this is obvious from the description of the claims.

The above-described embodiments are intended to facilitate understanding of the present invention and are not intended to be construed as limiting. The components included in the above-described embodiments, arrangement, materials, conditions, shapes, sizes, or the like, of the components are not limited to those exemplified and may be appropriately changed. The components illustrated in the different embodiments can be replaced or combined partially to the extent not technically inconsistent.

### Reference Signs List

1 Resolver, 10 Rotor, 11 Protruding part, 12 Recessed part 13 Protruding part, 20 Stator, 21 Stator assembly, 22 Stator core, 23 Coil, 24 Insulator, 24a Upper half part (first member), 24b Lower half part (second member), 25 Winding, 26 Annular part, 27 Teeth, 28 Long hole, 29 Spoke, 30 Magnetic pole part, 31 Projecting part, 32 Main body part, 33 Terminal block, 34 Terminal cover, 35 Terminal pin (terminal), 35a First connecting part, 35b Second connecting part, 36 Lead, 36a Cover, 36b Core wire, 37 Upper surface, 38 Long groove, 38a Bottom surface, 39 Recessed part, 39a Bottom surface, 39b Inner peripheral standing wall (standing wall), 39c Outer peripheral standing wall (standing wall), 40 Through-hole, 41 Recessed part, 42 Lower surface, 43 Filler, 44 Filler application device, 45 Nozzle, A Upper side, B Lower side, C Radially outer side, C1 Virtual circle, C2 Virtual circle, D Radially inner side, x Rotation axial line

## Claims

1. A stator assembly comprising:
a stator core;
a plurality of coils including a winding wound around the stator core;
a terminal electrically connected to the winding; and
a terminal block provided on the stator core and configured to support the terminal,
wherein
the terminal block includes a recessed part and a plurality of through-holes formed in the recessed part, and
the terminal electrically connected to a lead in the through-hole is covered with a filler.

2. The stator assembly according to claim 1, wherein the filler is disposed across the plurality of through-holes.

3. The stator assembly according to claim 2, wherein the filler fills the recessed part.

4. The stator assembly according to claim 1, wherein
the recessed part is recessed from an upper surface of the terminal block in an axial line direction, and
the upper surface extends to a radially outer side beyond the recessed part.

5. The stator assembly according to claim 1, wherein the recessed part includes a standing wall extending in an axial line direction at a radially inner side of the recessed part.

6. The stator assembly according to any one of claims 1 to 5, wherein
the terminal block is disposed on a long hole formed at the stator core in an arc shape in a peripheral direction, and
the plurality of through-holes are disposed in an arc shape along the long hole.

7. The stator assembly according to claim 6, wherein the recessed part extends in a tangential direction of an arc defined around an axial line.
